# EUROPÄISCHE PATENTANMELDUNG

(11) **EP 2 708 112 A1**
(43) Veröffentlichungstag der Anmeldung: **19.03.2014**
(21) Anmeldenummer: 12184834.5
(22) Anmeldetag: 18.09.2012
(51) Int. Cl.: A01F 25/16, A01F 25/13

(54) **Siloabdeckungsband und Silo**

(71) Anmelder: Böck Silosysteme GmbH, 83342 Tacherting (DE)
(72) Erfinder: Schmitz, Martin, 83342 Tacherting (DE)
(74) Vertreter: Zimmermann & Partner

(57) **Zusammenfassung**

Die vorliegende Erfindung stellt ein Silobefestigungsband (10) mit einer Vielzahl von Befestigungseinheiten (25) zur Verfügung, wobei die Befestigungseinheiten (25) jeweils zwei Einhängeeinheiten (15) zum Einhängen von Masseträgern (3) aufweisen. Gemäß einem weiteren Aspekt wird ein Silo (1) zur Silierung von Schüttgütern (4) zur Verfügung gestellt, das eine Silofolie (2) sowie ein solches Silobefestigungsband (10) zur Verfügung gestellt.

## Beschreibung

### Gegenstand der Erfindung

Die vorliegende Erfindung betrifft eine Siloabdeckung, ein Band zur Siloabdeckung, ein Silo, und ein Verfahren zur Siloabdeckung. Die vorliegende Erfindung betrifft insbesondere eine benutzerfreundliche Siloabdeckung für Erntegutsilos, insbesondere Futtermittelsilos.

### Hintergrund der Erfindung

Unter Silo oder Silage wird im Allgemeinen ein großer Speicher für Schüttgüter verstanden. Im Rahmen der vorliegenden Offenbarung handelt es sich insbesondere um ein Erntegutsilos, wie zum Beispiel Futtermittelsilos, insbesondere zur Herstellung von hochwertigem Futter für Nutztiere bzw. zur Herstellung von nutzbarer Energie. Im Allgemeinen wird das zu silierende Pflanzenmaterial zerkleinert, in das Silo eingebracht, verdichtet und luftdicht abgeschlossen. Hierdurch werden pflanzeneigene Enzyme sowie aerobe und ggfs. anaerobe Mikroorganismen wie zum Beispiel Bakterien, Hefen, Schimmelpilze unterdrückt. Die Milchsäurebakterien wandeln den Zucker in Säuren um, insbesondere Milchsäure, und der pH-Wert fällt auf typischerweise 4,0-4,5 ab. Dadurch werden weitere gärschädliche Bakterien wie zum Beispiel aus der Coli-Aeorogenes-Gruppe, Listerien und Clostridien am Wachstum gehindert. Gegebenenfalls werden noch Silierhilfsmittel zugegeben.

Fehler bei der Silierung machen die Silage für das Vieh ungenießbar und bergen die Gefahr von Erkrankungen durch toxische Ausscheidungsprodukte von Bakterien (z. B. Botulismus) und Pilzen. Insbesondere bei fehlender Erkennung, stellt eine fehlerhafte Silierung ein hohes Gesundheitsrisiko für Tier und Mensch dar. Doch auch bei Erkennung einer fehlerhaften Silierung ist das eingesetzte Erntegut verdorben und damit unbrauchbar; es bedeutet somit für den Betreiber des Silos einen hohen Verlust.

Damit stellt sich für den Betreiber des Silos insbesondere die Aufgabe, das eingebrachte Pflanzenmaterial möglichst gut abzudecken. Eine solche Abdichtung erfolgt mit speziellen Folien, häufig einem Schichtenstapel aus dünner Unterziehfolie sowie einer vergleichsweise dicken Deckfolie, ggfs. gefolgt von einem Schutzgitter zum Schutz der Folie vor äußeren Einwirkungen (wie z.B. Vogelfraß).

Um die Folie auf dem Futtermaterial zu halten, wird sie mit beispielsweise Reifen oder Sandsäcken beschwert. Hierbei stellt sich häufig das Problem, dass die Beschwerung nicht nur gleichmäßig erfolgen soll, sie sollte auch wetterfest, rutschfest und luftdicht erfolgen. Dies ist bei der herkömmlichen Ablage der Säcke und/oder Reifen auf der Folie nicht immer gegeben.

Damit stellt sich die Aufgabe, eine Siloabdeckung bzw. ein Band für eine Siloabdeckung zur Verfügung zu stellen, das die Probleme im Stand der Technik überwindet bzw. wenigstens lindert.

### Zusammenfassung der Erfindung

Der Erfindung liegt daher die Aufgabe zu Grunde, eine Siloabdeckung anzugeben, die die obigen Probleme des Standes der Technik lindert oder behebt, insbesondere soll eine stabile und benutzerfreundliche Siloabdeckung zur Verfügung gestellt werden, die ein relativ luftdichtes Abschließen der Silofolie über dem Füllmaterial ermöglicht.

Gemäß einem Aspekt der vorliegenden Erfindung wird ein Silobefestigungsband mit einer Vielzahl von Befestigungseinheiten zur Verfügung gestellt, wobei die Befestigungseinheiten jeweils zwei Einhängeeinheiten zum Einhängen von Masseträgern aufweisen.

Gemäß einem weiteren Aspekt der vorliegenden Erfindung wird ein Silo zur Silierung von Schuttgütern zur Verfügung gestellt. Das Silo umfasst eine Siloabdeckung sowie ein hierin beschriebenes Siloabdeckungsband. Die Siloabdeckung wird hierin auch Silofolie genannt.

Weitere Ausführungsformen, Details, Aspekte und Vorteile der Erfindung sind im Folgenden dargestellt, oder ergeben sich aus den Unteransprüchen sowie den Figuren.

Masseträger im Rahmen der vorliegenden Erfindung sind ausgelegt, Masse zur Verfügung zu stellen, um deren Gewichtswirkung als Befestigungsmittel und Andrückmittel nutzen zu können. Darüber hinaus weisen Masseträger im Rahmen der vorliegenden Erfindung typischer Weise mindestens eine Halteeinrichtung auf, wie zum Beispiel eine Griffschlaufe, wobei sie mit Hilfe der Halteeinrichtung mit den Enhängeeinheiten des Silobefestigungsbandes in vorübergehend ortsstabilen Kontakt gebracht werden können. Masseträger sind insbesondere Sand- und Kiessäcke.

Durch die vorzugsweise Vermeidung der Aufheizung der Einhängeeinheiten und/oder Vermeidung der Wärmeleitung auf die darunter liegenden Elemente, wie zum Beispiel das Siloabdeckungsband bzw. die Silofolie, kann auch bei hohen Temperaturen bzw. bei großer Sonneneinstrahlung vermieden werden, dass sich die darunter liegende Silofolie lokal übermäßig erhitzt und es somit zu Schaden an der Silofolie kommt. Eine Verletzung der Silofolie kann eine verheerende Wirkung auf die Silage haben, da durch sie evtl. sauerstoffhaltige Luft zur Silage gelangt, was die bereits oben beschriebenen negativen Folgen für die Silage mit sich bringt.

Entsprechend ist es bevorzugt, dass die Einhängeeinheiten derart befestigt und geformt sind, dass sie bei Einsatz des Silobefestigungsbandes sich ortsfest über dem Band befinden und insbesondere nicht über die Siloabdeckung verrutschen können. Dies kann wichtig sein, da sich bei starker Sonneneinstrahlung die Einhängeeinheiten stark erhitzen können und bei Kontakt mit der Siloabdeckung ggfs. zu einer Verletzung der Abdeckung führen könnten.

Ganz allgemein ist das Silobefestigungsband vorzugsweise aus einem hitzebeständigen Material gebildet.

Gemäß bevorzugten Ausführungsformen umfassen die Einhängeeinheiten ein Wurzelteil. Sie sind typischer Weise über das Wurzelteil mit dem Silobefestigungsband fest verbunden. Die Verbindung ist vorzugsweise unlösbar ausgestaltet; zum Beispiel können die Einhängeeinheiten eine Aussparung aufweisen, durch die ein über die Einhängeeinheiten geführtes Band mit dem Siloabdeckungsband unlösbar verbunden ist, zum Beispiel vernäht ist. Durch die unlösbare Verbindung wird eine besondere Stabilität und Haltbarkeit der bevorzugten erfindungsgemäßen Lehre zur Verfügung gestellt.

Gemäß bevorzugten Ausführungsformen weisen die zwei Einhängeeinheiten der Befestigungseinheiten jeweils dasselbe Wurzelteil auf. Dies verbindet eine einfache Herstellung der Befestigungseinheiten mit einer zweckerfüllenden Ausgestaltung.

Gemäß bevorzugten Ausführungsformen weisen die Einhängeeinheiten einen Überstand auf, der zum Einhängen der Masseträger dient. Unter Überstand wird insbesondere eine lippenförmige Ausgestaltung verstanden, über die die Masseträger bzw. die Griffanordnung der Masseträger gezogen werden kann, um in die Einhängeeinheit eingehängt zu sein und somit von der Befestigungseinheit gehalten zu werden. Der Ausdruck "gehalten", wie er hierin benutzt wird, zielt dabei darauf ab, dass bei Einsatz des Silobefestigungsbandes auf einem hügelförmigen Silo die Masseträger auf Grund ihres Gewichtes in die Gegenrichtung des Überstandes der Befestigungseinheit ziehen. Vorzugsweise bedarf es daher keiner extra Sicherung. Die Masseträger können so bspw. von dem Landwirt angenehm eingehängt werden (bei Abdeckung des Silos mit Silofolie) bzw. ausgehängt werden (bei Öffnung des Silos, d.h, bei zumindest stückweiser Entfernung der Silofolie).

Gemäß bevorzugten Ausführungsformen verläuft der Überstand der Einhängeeinheit in Längsrichtung des Silobefestigungsbandes. Der Überstand geht im Allgemeinen aus von dem an dem Silobefestigungsband befestigten Wurzelteil und erstreckt sich dann in Längsrichtung des Bandes.

Es ist typisch, dass der Überstand der jeweils zwei Einhängeeinheiten spiegelsymmetrisch verläuft. Darunter soll verstanden werden, dass der Überstand der einen Einhängeeinheit in die entgegengesetzte Richtung ragt wie der Überstand der anderen Einhängeeinheit. Beide Einhängeeinheiten teilen sich typischer Weise eine gemeinsame Wurzel, die gemäß Ausführungsformen den "Spiegel" der Spiegelsymmetrie darstellt. Dadurch kann gewährleistet werden, dass ein Masseträger pro Befestigungseinheit eingehängt werden kann, egal in welche Richtung das Band auf dem Silo verläuft (d.h. mit Aufwärts- oder Abwärtskomponente gegenüber der Horizontalen).

Es ist darüber hinaus ganz allgemein typisch, dass die Einhängeeinheiten einstückig ausgebildet sind, das heißt, dass die beiden Einhängeeinheiten einer Befestigungseinheit von einem Stück gebildet werden. Dies vereinfacht nicht nur den Herstellungsprozess der Einhängeeinheiten, sondern auch die Befestigung beider Einhängeeinheiten auf dem Silobefestigungsband.

Gemäß bevorzugten Ausführungsformen kann der mindestens eine Überstand ein verjüngtes Ende aufweisen. Die Verjüngung kann beispielsweise in abgerundeten oder zugeschnittenen Ecken bestehen. Die Verjüngung dient der leichteren Befestigung der Masseträger auf der Einhängeeinheit, wie zum Beispiel beim Drüberstülpen der Griffschlaufe eines Masseträgers.

Typischer Weise ist die Länge des Überstandes der Einhängeeinheit in Längsrichtung des Bandes wenigstens 7 cm, insbesondere wenigstens 10 cm. Dadurch ist auch bei nur geringer vertikaler Komponente des Bandes ein sicheres Einhängen und Verbleiben der Masseträger an der Einhängeeinheit möglich, ohne dass diese bei Witterung oder Wind wieder aus der Einhängeposition gelöst werden können.

Die Breite der Einhängeeinheiten liegt typischer Weise zwischen 3 cm und 12 cm, wie zum Beispiel 8 cm. Unter Breite der Einhängeeinheiten wird dabei die Ausdehnung in der Richtung der Breite des Siloabdeckungsbandes verstanden. Die Breite des Silobefestigungsbandes liegt typischer Weise zwischen 15 cm und 30 cm, insbesondere zwischen 18 cm und 23 cm. Die Beabstandung der Befestigungseinheiten zueinander entspricht typischer Weise der Länge eines Masseträgers, ggfs. plus maximal 10 cm. Die Befestigungseinheiten sind typischer Weise zueinander wenigstens 90 cm bzw. 100 cm beabstandet, insbesondere zwischen 95 cm und 110 cm. Der Abstand der Befestigungseinheiten ist vorzugsweise zwischen allen Befestigungseinheiten identisch. Durch eine solche Dimensionierung kann das Silo nahezu durchgängig in Bandrichtung mit Masseträgern bedeckt werden.

Vorzugsweise werden pro Silobefestigungsband mindestens 10 Befestigungseinheiten vorgesehen. Typische Bandlängen liegen zwischen 12 und 35 m. Gemäß bevorzugten Ausführungsformen der Erfindung wird die Bandlänge individuell nach Anfrage festgelegt.

Vorzugsweise sind die Einhängeeinheiten der Befestigungseinheiten aus einem metallischen Material gebildet. Beispielsweise im Vergleich zu einer Einhängeeinheit aus Plastik hat dies den Vorteil, dass dadurch eine langjährige Stabilität garantiert werden kann, die auch durch die typischer Weise häufige Sonneneinstrahlung, Regen, Wärme und Kälte auf dem Silo nicht gefährdet ist. Gemäß bevorzugten Ausführungsformen wird die Befestigungseinheit von einer Platte, insbesondere einer Metallplatte, gebildet.

Gemäß bevorzugten Ausführungsformen, ist bei einem Silo an jeder Befestigungseinheit, die sich über der Silofolie befindet, genau ein Masseträger befestigt. Die zuoberst liegende Befestigungseinheit kann jedoch bspw. ohne einen hieran eingehängten Masseträger verbleiben.

### Kurze Beschreibung der Figuren

Nachfolgend werden Ausführungsbeispiele an Hand der beigefügten Zeichnungen erläutert, in denen zeigt:
Fig. 1A und 1B zeigen schematische Querschnittsansichten eines Silo eines Freigärhaufens gemäß hierin beschriebener Ausführungsformen;
Fig. 2A und 2B zeigen schematische Querschnittsansichten eines Silos einer Fahrsilos gemäß hierin beschriebener Ausführungsformen;
Figuren 3A und 3B zeigen schematische Draufsichten auf einen Ausschnitt eines Silobefestigungsbandes gemäß hierin beschriebener Ausführungsformen;
Fig. 4 zeigt eine schematische Querschnittsansicht eines Ausschnitts einer Siloabdeckung gemäß hierin beschriebener Ausführungsformen;
Fig. 5 zeigt eine schematische Querschnittsansicht eines Fahrsilos gemäß hierin beschriebener Ausführungsformen; und

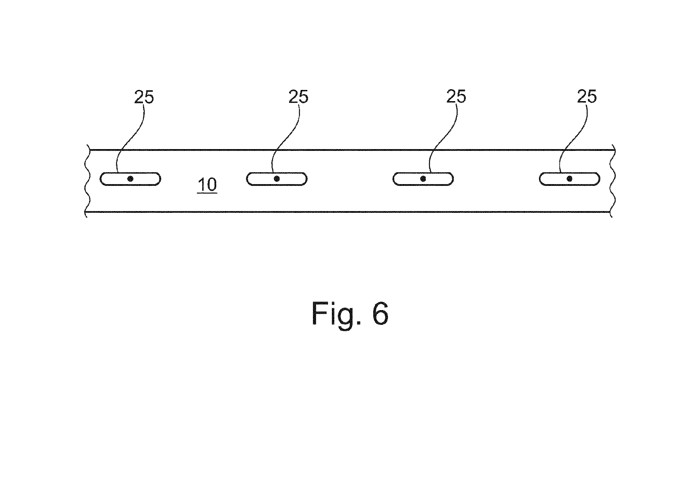

Fig. 6 zeigt eine schematische Draufsicht auf einen Ausschnitt eines Silobefestigungsbandes gemäß hierin beschriebener Ausführungsformen.

### Detaillierte Beschreibung der Ausführungsformen

Im Folgenden wird im Detail auf Ausführungsformen eingegangen, von welchen ein oder mehrere Beispiele in den Zeichnungen gezeigt sind. Dabei ist zu beachten, dass Merkmale, die als Teil einer Ausführungsform beschrieben sind mit anderen Ausführungsformen kombiniert werden können. Die vorliegende Offenbarung ist somit nicht auf die konkret beschriebenen Ausführungsformen begrenzt, sondern schließt auch alle möglichen Kombinationen der genannten Ausführungsformen und Merkmale mit ein. Insbesondere ist der Einsatz der vorliegenden Erfindung nicht auf Freigärhaufen oder Fahrsilos beschränkt, sondern umfasst jedes mögliche Silo, bei dem eine Abdeckung mit Folie erfolgen kann.

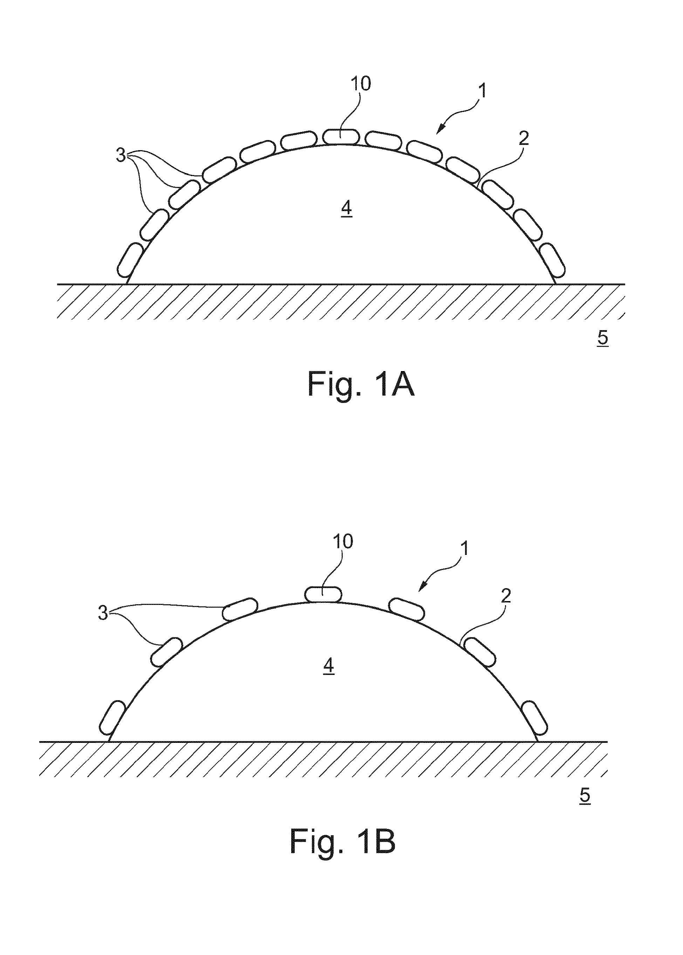

Fig. 1A zeigt eine schematische Querschnittsdarstellung einer Siloabdeckung eines Silos 1 (oder synonym auch "Silage" genannt). In der beispielhaften Darstellung aus Fig. 1A und Fig. 1B handelt es sich um einen Freigärhaufen, der seitlich keine Bewandung aufweist. Das Futtermaterial 4 lagert auf einem Untergrund 5, wie zum Beispiel dem Boden, der beispielsweise aus Beton besteht. Wie in der Figur erkennbar, aber nicht beschränkt auf das Beispiel der Figur, wird das Futtermittel in Form eines Haufen aufgehäuft, wobei es insbesondere verdichtet sein kann. Anschließend wird es mit einer Silofolie 2 bedeckt. Um einen besseren Luftabschluss sowie eine bessere Wetterbeständigkeit zu garantieren, wird die Silofolie 2 mit Masseträgern 3 beschwert.

In Fig. 1A ist das im Querschnitt nicht von der Silofolie 2 zu unterscheidende Siloband 10 mit einem Bezugszeichen versehen. Das Siloband gemäß der vorliegenden Offenbarung erlaubt die Fixierung der Masseträger 3 an vordefinierten Positionen. Durch die Befestigung an dem Siloband sind die Masseträger wind- und wetterfest auf der Silofolie positioniert. Ein luftdichter Abschluss der Silage kann gewährleistet werden.

Während die in Fig. 1A illustrierte Ausführungsform einen erfindungsgemäßen luftdichten Abschluss beispielhaft darstellen soll, verdeutlicht die Ausführungsform aus Fig. 1B, dass sich gemäß hierin beschriebener Ausführungsformen nicht auf jeder Befestigungseinheit ein Masseträger befinden muss. Vielmehr reicht es für die Funktion der Fixierung der Siloabdeckung aus, wenn sich nicht an jeder Befestigungseinheit ein Masseträger befindet, wie zum nur an jeder zweiten Befestigungseinheit.

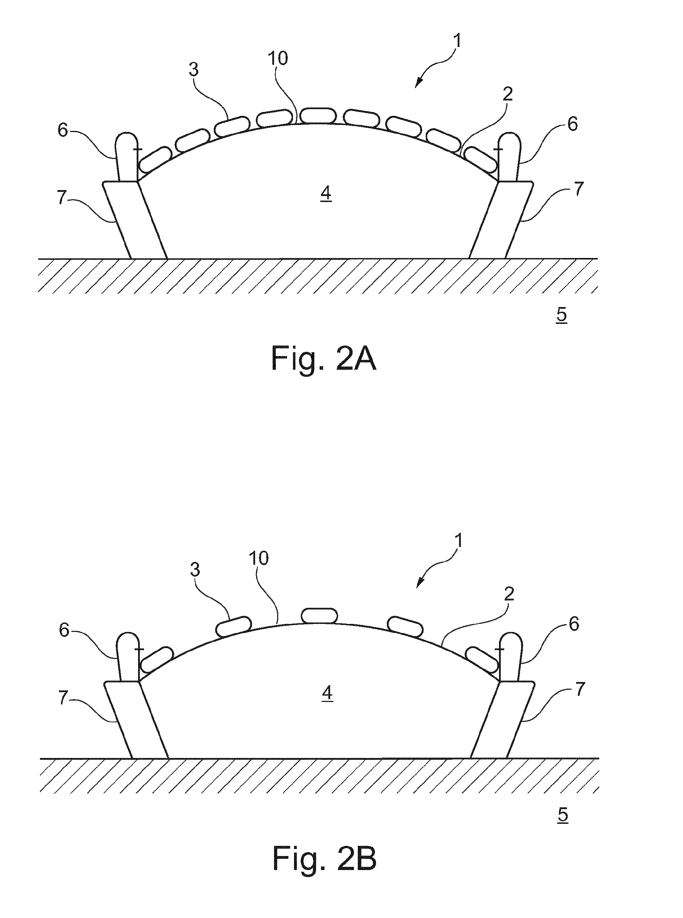

Fig. 2A zeigt ein Fahrsilo, das im Gegensatz zum Freigärhaufen eine seitliche Bewandung 7 aufweist. Auch hier sind die Masseträger 3 über das Silobefestigungsband 10 auf der Silofolie 2 befestigt. Zur Befestigung der Silofolie am Rand kann zudem noch eine Abspanneinrichtung 6 vorgesehen sein, die die Silofolie auf die Silage drückt und/oder zum Rand des Silos hinzieht.

Analog zum Beispiel der Fig. 1A zeigt die Fig. 2A ebenfalls eine mögliche Ausführungsform, gemäß der sich auch bei einem Fahrsilo nicht an jeder Befestigungseinheit ein Masseträger befindet, sondern, wie beispielhaft gezeigt, nur an jeder zweiten. Im Allgemeinen ist es auch möglich, dass sich nur an jeder dritten oder gar jeder vierten Befestigungseinheit ein Masseträger befindet. Diesbzgl. gilt es aber zu beachten, dass eine reduzierte Besetzung mit Masseträgern zwar die Folie ausreichend fixieren kann, aber bzgl. des Luftabschlusses im Vergleich zu einem durchgehend besetzten Silobefestigungsband benachteiligt ist.

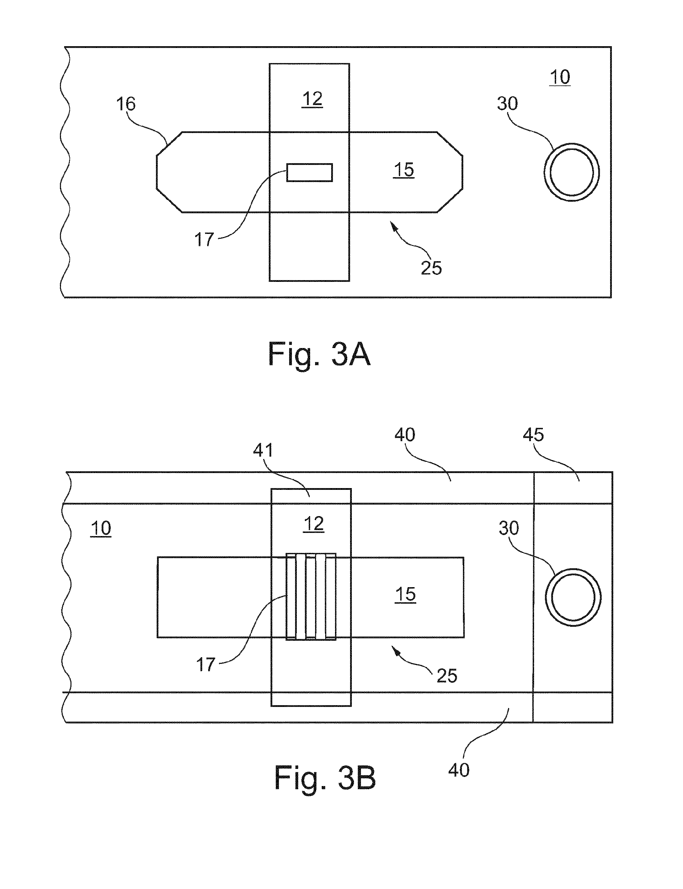

Fig. 3A zeigt beispiel- und schemenhaft eine mögliche Ausführungsform einer auf einem Silobefestigungsband 10 angeordneten Befestigungseinheit 25. Die Befestigungseinheit 25 weist zwei Einhängeeinheiten 15 auf, die von jeweils einem in Längsrichtung des Bandes verlaufenden Überstand gebildet werden. Die beiden Einhängeeinheiten 15 werden von einem Keil gebildet, der mittig an dem Wurzelteil 17 (oder auch nur Wurzel genannt) mit dem Silobefestigungsband verbunden ist.

Zum Beispiel kann ganz Allgemein und nicht beschränkt auf die Ausführungsform der Fig. 3 ein Querband 12, das an seinen äußeren Ende mit dem Silobefestigungsband verbunden sein kann, über der Einhängeeinheiten ausgerichtet sein. Die bspw. als ein Stück ausgebildeten Einhängeeinheiten können mittig an ihrer Wurzel eine Ausnehmung aufweisen, an der das über den Einhängeeinheiten verlaufende Querband 12 mit dem unter den Einhängeeinheiten verlaufenden Silobefestigungsband fest verbunden, zum Beispiel, vernäht, geleimt, geschweißt oder verklebt sein kann. Die Verbindung kann dabei so erfolgen, dass dadurch auch die Ausrichtung der Einhängeeinheiten gegenüber dem Silobefestigungsband festgelegt ist. Jede Form der dauerhaften Verbindung ist möglich.

Darüber hinaus ist es gemäß speziellen Ausführungsformen auch möglich, dass die Verbindung der Einhängeeinheiten mit dem Silobefestigungsband nicht dauerhaft sondern nur vorübergehend ausgestaltbar ist, um beispielsweise benutzerfreundlich die Einhängeeinheiten auszutauschen.

In Fig. 3A ist des Weiteren auch noch beispielhaft eine Befestigungsöse 30 gezeigt, die an einem Ende des Befestigungsbandes angeordnet ist, und mit deren Hilfe das Befestigungsband am Rande des Silos mit dem Untergrund 5 oder der Bewandung 7 befestigt werden kann. Dazu kann auch die in den Figuren 2A und 2B dargestellte Abspanneinrichtung eingesetzt werden.

Fig. 3B zeigt beispiel- und schemenhaft eine mögliche Ausführungsform einer auf einem Silobefestigungsband 10 angeordneten Befestigungseinheit 25, die teils der Ausführungsform von Fig. 3A entsprechen, und teils unterschiedlich sind. Die Einhängeeinheiten 15 können allgemein, wie in Fig. 3B veranschaulicht, eine Zungen- oder Plattenform aufweisen, mit oder ohne abgerundete Ecken. Abgerundete Ecken können vorteilhaft sein, um das Einhängen der Masseträger zu vereinfachen.

Wie in der in Fig. 3A illustrierten Ausführungsform ist das Querband 12 beidseitig mit dem Silobefestigungsband 10 fest verbunden. Es ist allgemein möglich, dass zur zusätzlichen Stabilisierung der Einhängeeinheiten 15 das Wurzelteil 17 durch das Querband 12 durchgeschlauft ist, wie es beispielhaft in der Fig. 3B gezeigt ist. Das Wurzelteil der Befestigungseinheit kann daher mit einer Verschlaufungseinheit ausgestaltet sein, wie zum Beispiel einem in Fig. 3B gezeigten Verschlaufgitter. Insbesondere in diesem Fall kann es vorteilhaft sein, dass die Breite der Wurzel 17 (d.h. die Ausdehnung der Wurzel in der Längsrichtung des Silobefestigungsbandes) größer ist als die Breite des Querbandes 15, mindestens aber so breit wie das Querband ist.

Das Silobefestigungsband kann zudem eine Seitenverstärkung 40 aufweisen, die beispielsweise von einem parallel zum Silobefestigungsband an dessen Rand verlaufendem Verstärkungsband gebildet wird. Die Seitenverstärkung hat eine typische Breite von zwischen 10 mm und 30 mm. Es kann zudem mit dem Querband verbunden, zum Beispiel, vernäht 41 sein.

In Fig. 3B ist des Weiteren illustriert, dass die beiden Enden des Silobefestigungsbandes eine Endverstärkung 45 aufweisen können. Die Endverstärkung erstreckt sich typischer Weise zwischen 20 mm und 80 mm in Richtung des Silobefestigungsbandes, ausgehend von dessen Ende.

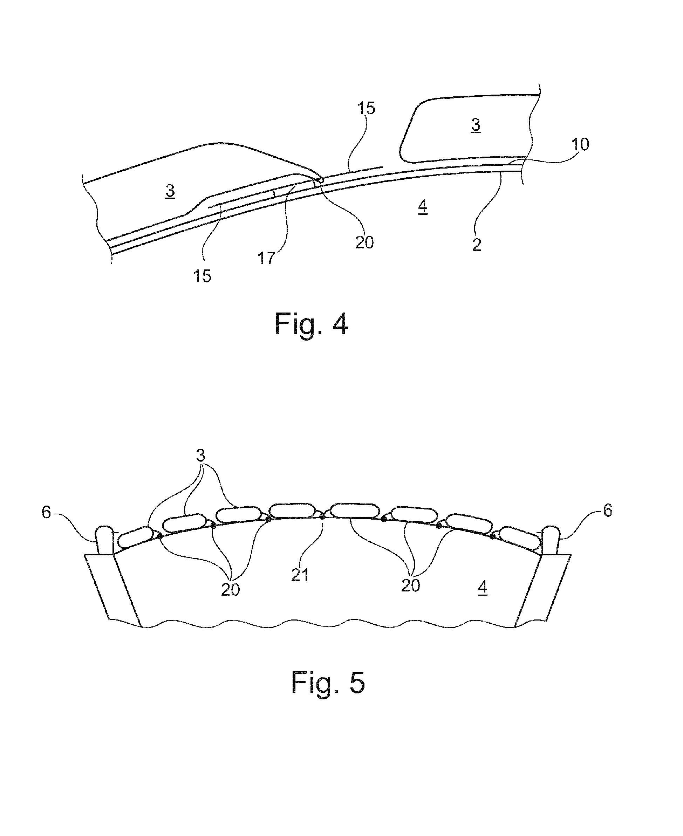

Fig. 4 zeigt einen Ausschnitt eines sich im Einsatz befindlichen Silobefestigungsbandes 10. Zur Verdeutlichung sind Freiräume zwischen den einzelnen Elementen der Figur eingezeichnet, auch wenn diese in praxi auf Grund der jeweils wirkenden Gewichtskräfte nicht auftreten. So liegt in praxi das Silobefestigungsband 10 bspw. direkt auf der Silofolie 2 oder einem hierauf befindlichen Gitter auf.

Fig. 4 verdeutlicht den Einsatz des Bandes und der Einhängeeinrichtungen. Das Erntegut 4 ist von der Folie 2 abgedeckt. Die Folie wird mit Hilfe des Silobefestigungsbandes 10 auf das Futter gedrückt. Ergänzend hierzu wirken die Masseträger 3, die vorliegend als Sandsäcke gezeichnet sind. Die Masseträger 3 weisen eine Halteeinrichtung 20 auf, wie zum Beispiel eine Griffschlaufe, die über die als Überhang dargestellte Einhängeeinheiten 15 gezogen wird. Auf Grund der Schwerkraft ziehen die Masseträger 3 zur Wurzel 17 der Befestigungseinheit hin, und verbleiben dort auch bei schlechter Witterung.

Erkennbar ist zudem die Befestigung der Wurzel 17 der Einhängeeinheiten 15 mit Silobefestigungsband 10. Zudem wird deutlich, dass die sich in der beispielhaften Figur linksseitig erstreckende Einhängeeinheit 15 ohne eingehängten Masseträger verbleibt. Ein Einhängen wäre in der gezeigten Ausführungsform auch gar nicht möglich, da die Schwerkraft den Masseträger wieder aus der Einhängeeinheit herausziehen würde. Ganz allgemein und nicht beschränkt auf die Ausführungsform der Fig. 4 sind die beiden Einhängeeinheiten so ausgelegt bzw. angeordnet, dass bei Einsatz des Silobefestigungsbandes auf einem Silo nur einer der beiden Einhängeeinheiten mit einem Gewicht versehen wird. In Fig. 4 ist darüber hinaus bereits der benachbarte Masseträger 3 gezeigt, der an der benachbarten Befestigungseinheit befestigt ist.

Die schematische Darstellung der Fig. 5 soll noch einmal die Gesamtanordnung eines erfindungsgemäßen Silos veranschaulichen, das vorliegend beispielhaft in Form eines Fahrsilos gezeichnet ist. Wie zu erkennen ist, sind die Masseträger 3 entlang des Silobefestigungsbandes 10 angeordnet und über ihre Halteeinrichtung 20 in jeweils eine Einhängeeinheit 15 der Vielzahl der Befestigungseinheiten 25 eingehängt.

Gemäß sämtlichen hierin beschriebenen Ausführungsformen kann die bei Einsatz des Bandes an oberster Stelle befindliche Befestigungseinheit ebenfalls einseitig mit einem Masseträger behangen werden, wobei es in diesem Fall möglich ist, diesen extra zu sichern, da, wie bereits klar geworden ist, bei im Wesentlichen waagrechter Ausrichtung der Einhängeeinheit die Schwerkraft allein eine ausreichende Sicherung des Masseträgers an der Einhängeeinheit nicht zur Verfügung stellen kann. Es ist aber auch denkbar, dass die oberste Befestigungseinheit beidseitig mit einem Masseträger behangen wird, sofern die Halteeinrichtungen der beiden Masseträger derart ausgebildet sind, dass sie nicht gegenseitig ein Überziehen über die Einhängeeinheiten blockieren. Ein solches Beispiel ist in Fig. 5 gezeigt und mit dem Bezugszeichen 21 versehen. Darüber hinaus ist es auch möglich, dass die oberste Befestigungseinheit ohne einen Masseträger verbleibt.

Es versteht sich, dass zusätzlich zur Silofolie auch weitere Elemente auf dem Silo angeordnet sein können, wie zum Beispiel Schutzgitter zum Schutz der Folie vor äußeren Einwirkungen (wie z.B. gegen Vogelfraß etc).

Die Erfindung wurde anhand der beispielhaften Figuren illustriert. Erfindungsgemäß bevorzugte Merkmale wurden dabei anhand der entsprechenden Figuren besprochen. Für den Fachmann versteht es sich von selbst, dass diese Merkmale auch bei anderen Ausführungsformen eingesetzt werden können, außer es sprechen wesentliche technische Gründe dagegen.

## Patentansprüche

1. Silobefestigungsband (10) mit einer Vielzahl von Befestigungseinheiten (25), wobei die Befestigungseinheiten jeweils zwei Einhängeeinheiten (15) zum Einhängen von Masseträgern (3) aufweisen.

2. Silobefestigungsband nach einem der vorhergehenden Ansprüche, wobei die Einhängeeinheiten (15) aus einem Metall bestehen.

3. Silobefestigungsband nach einem der vorhergehenden Ansprüche, wobei die Einhängeeinheiten (15) jeweils ein Wurzelteil (17) umfassen, über das sie mit dem Silobefestigungsband (10) verbunden sind, wobei die Verbindung vorzugsweise unlösbar ausgestaltet ist.

4. Silobefestigungsband nach Anspruch 3, wobei das Wurzelteil (17) eine Verschlaufungseinheit umfasst.

5. Silobefestigungsband nach Anspruch 3 oder 4, wobei die jeweils zwei Einhängeeinheiten (15) einer Befestigungseinheit dasselbe Wurzelteil aufweisen.

6. Silobefestigungsband nach einem der vorhergehenden Ansprüche, wobei die Einhängeeinheiten (15) zum Einhängen der Masseträger (3) einen Überstand aufweisen.

7. Silobefestigungsband nach Anspruch 6, wobei der Überstand ausgehend von dem Wurzelteil (17) der Einhängeeinheit (15) in Längsrichtung des Silobefestigungsbandes verläuft.

8. Silobefestigungsband nach einem der Ansprüche 6 bis 7, wobei der Überstand wenigstens 5 cm, vorzugsweise wenigstens 10 cm übersteht.

9. Silobefestigungsband nach einem der Ansprüche 5 bis 8, wobei die Überstande der beiden Einhängeeinheiten zueinander spiegelsymmetrisch sind.

10. Silobefestigungsband nach einem der vorhergehenden Ansprüche, wobei die Breite der Einhängeinheiten zwischen 5 cm und 15 cm liegt, und/oder die Breite des Silobefestigungsbandes zwischen 15 und 35cm liegt.

11. Silobefestigungsband nach einem der vorhergehenden Ansprüche, wobei die Befestigungseinheiten zueinander wenigstens und/oder höchstens 100 cm beabstandet sind, und/oder wobei der Abstand der Befestigungseinheiten zwischen allen Befestigungseinheiten identisch ist.

12. Silobefestigungsband nach einem der vorhergehenden Ansprüche, wobei mindestens 10, vorzugsweise mindestens 15 Befestigungseinheiten vorgesehen sind.

13. Silobefestigungsband nach einem der vorhergehenden Ansprüche, wobei die Befestigungseinheit von einer Platte oder Zunge, insbesondere einer Metallplatte oder Metallzunge, gebildet wird.

14. Silo (1) zur Silierung von Schuttgütern (4), insbesondere von Erntegut, umfassend eine Silofolie (2) sowie ein Siloabdeckungsband gemäß einem der vorhergehenden Ansprüche.

15. Silo gemäß Anspruch 14, wobei jeweils genau ein Masseträger (3) an den Befestigungseinheiten befestigt ist.
